(19)

**Europäisches Patentamt**
**European Patent Office**
**Office européen des brevets**

(11) **EP 4 462 153 A2**

(12) **EUROPEAN PATENT APPLICATION**

(43) Date of publication:
**13.11.2024 Bulletin 2024/46**

(21) Application number: **24174589.2**

(22) Date of filing: **07.05.2024**

(51) International Patent Classification (IPC):
**G01S 7/41** (2006.01)   **G01S 13/42** (2006.01)
**G01S 13/52** (2006.01)   **G01S 13/58** (2006.01)
**G01S 13/89** (2006.01)   **G01S 13/931** (2020.01)

(52) Cooperative Patent Classification (CPC):
**G01S 13/931; G01S 7/412; G01S 7/414;
G01S 7/415; G01S 13/42; G01S 13/52;
G01S 13/582; G01S 13/584; G01S 13/89;
Y02T 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023   CN 202310532630**

(71) Applicants:
• **ZF (China) Investment Co. Ltd.**
  **Shanghai Shanghai 201615 (CN)**
• **Shanghai Jiao Tong University**
  **Shanghai 200240 (CN)**

(72) Inventors:
• **Liu, Changhe**
  **Shanghai, 201615 (CN)**
• **Zhang, Han**
  **Shanghai, 200240 (CN)**
• **Li, Xingyi**
  **Shanghai, 200240 (CN)**
• **Chen, Weidong**
  **Shanghai, 200240 (CN)**
• **Wang, Jingchuan**
  **Shanghai, 200240 (CN)**

(74) Representative: **ZF Friedrichshafen AG**
  **Gewerblicher Rechtsschutz**
  **Löwentalerstraße 20**
  **88046 Friedrichshafen (DE)**

(54) **POSE GRAPH SLAM COMPUTATION METHOD AND SYSTEM BASED ON 4D MILLIMETER-WAVE RADAR**

(57)    The present invention provides a pose graph SLAM computation method and system based on a 4D millimeter-wave radar. The method includes: step S1: extracting a ground point cloud, and comparing two consecutive frames of point clouds, to remove ghost points below the ground and random points; step S2: estimating a linear velocity and an angular velocity of a device based on Doppler velocity information in a 4D radar point cloud; and step S3: estimating and constructing a pose graph using a relative pose transformation that is obtained through point cloud registration performed based on a normal distribution transformation, pre-integration performed using an estimated device velocity, and loop closure detection; and estimating an optimal pose through graph optimization. In order to achieve better accuracy in the case of a sparse point cloud, the present invention pre-integrates an estimated ego vehicle velocity, to obtain an additional relative pose estimate; and the present invention introduces loop closure detection to identify places that have been reached again, thereby optimizing historical poses from a global perspective, to reduce a cumulative drift and implement accurate and robust mapping and localization.

Figure 1

**Description**

TECHNICAL FIELD

The present invention relates to the field of robot technologies, and specifically to a pose graph SLAM computation method and system based on a 4D millimeter-wave radar.

BACKGROUND OF THE INVENTION

Millimeter-wave radars have been widely used in the synchronous localization and mapping (SLAM) technology, especially in the field of autonomous driving. Compared with optical sensors such as a camera or lidar, the millimeter-wave radar is less sensitive to weather and light conditions and is much cheaper. However, despite these advantages, the millimeter-wave radar usually has a sparser point cloud and larger noise compared to the lidar, which poses challenges for precise localization and mapping. In recent years, the latest millimeter-wave radar sensor, namely 4D imaging radar (4D radar), has received increasing attention in autonomous driving due to its unique advantages over conventional radars.

Conventional millimeter-wave radars may be divided into two types: scanning radars and automotive radars. The scanning radar performs a 360-degree scan on the surrounding environment, and provides a two-dimensional radar energy image without velocity information. In addition, the automotive radar usually has a smaller field of view and provides a sparse 2D point cloud with a Doppler velocity. Compared with conventional millimeter-wave radar sensors, the 4D radar has a longer detection distance and a larger field of view. A 4D point cloud provided by the 4D radar has information in four dimensions: distance, azimuth angle, elevation angle, and Doppler velocity. In addition, the 4D radar also provides some low-level features, such as an energy intensity or a radar scattering cross section. Because the 4D radar has additional information and higher resolution, it provides new opportunities for the application of SLAM.

Regarding the issue of millimeter-wave radar SLAM, researchers at home and abroad have done a lot of research. According to the types of millimeter-wave radars applied, the millimeter-wave radars may be roughly divided into two types.

One type is SLAM algorithms based on the scanning radar, which occupy a dominant position in millimeter-wave radar SLAM. This type of algorithms uses 2D images obtained by the scanning radar as an input, and usually uses some feature extraction algorithms to extract feature points from the images, and then performs scanning registration based on the feature points. The most famous of the algorithms is the RadarSLAM algorithm proposed by Hong et al. [1] (Z. Hong, Y. Petillot, and S. Wang, "RadarSLAM: Radar based Large-Scale SLAM in All Weathers," in 2020 IEEE/RSJ International Conference on Intelligent Robots and Systems (IROS), Oct. 2020, pp. 5164-5170, iSSN: 2153-086). Inspired by visual SLAM related methods, they extract SURF feature points from radar images and perform registration. In addition, there are also some methods implementing scanning radar SLAM using deep learning. However, these methods are not applicable to 4D radar point clouds because they use 2D scanning radar images as an input.

The other type is the SLAM algorithm based on the automotive radar. This type of algorithm uses a sparse radar point cloud obtained by a conventional automotive radar as an input, and uses Doppler velocity information in the point cloud or scanning registration of the point cloud to estimate ego vehicle motion. Kellner et al. [2] (D. Kellner, M. Barjenbruch, J. Klappstein, J. Dickmann, and K. Dietmayer, "Instantaneous ego-motion estimation using Doppler radar," in 16th International IEEE Conference on Intelligent Transportation Systems (ITSC 2013), Oct. 2013, pp. 869-874, iSSN: 2153-0017.) uses the Doppler velocity information in the radar point cloud to compute an ego vehicle velocity, thereby implementing ego vehicle motion estimation. Kung et al. proposed a radar odometry algorithm suitable for scanning radars and automotive radars [3] (P.-C. Kung, C.-C. Wang, and W.-C. Lin, "A Normal Distribution Transform-Based Radar Odometry Designed For Scanning and Automotive Radars," in 2021 IEEE International Conference on Robotics and Automation (ICRA). Xi'an, China: IEEE, May 2021, pp. 14 417-14 423.). They use the ego vehicle velocity estimation method proposed by Kellner et al. to merge a plurality of frames of radar point clouds into a radar submap. Then, scanning matching based on a normal distribution transformation is applied to perform matching between two radar submaps, implementing ego vehicle motion estimation. However, the radar submap is only a simple superposition of consecutive radar point clouds using the ego vehicle velocity estimation, so its accuracy depends largely on the accuracy of the ego vehicle velocity estimation.

Patent document CN111522043A discloses an unmanned vehicle lidar rapid rematching and positioning method, which relates to the field of unmanned driving. This present invention is divided into a multi-sensor calibration module, a pose fusion module, and a fusion positioning module. Through multi-sensor joint calibration, consistency description of a target is obtained. Data fusion is performed on pose information of an unmanned vehicle resolved by a GPS sensor and a lidar sensor, to obtain vehicle pose information fused by the GPS sensor and the lidar sensor. When point cloud matching of a lidar SLAM positioning module fails, a fused pose is used for replacing a positioning prediction matrix of a point cloud matching algorithm, rapid rematching of the lidar SLAM algorithm is implemented, and continuous positioning of the unmanned vehicle SLAM algorithm is implemented. However, this present invention does not introduce loop closure detection to identify places that have been reached again, and therefore cannot optimize historical poses from a global perspective.

## SUMMARY OF THE INVENTION

In view of the deficiencies in the prior art, an objective of the present invention is to provide a pose graph SLAM computation method and system based on a 4D millimeter-wave radar.

The pose graph SLAM computation method based on a 4D millimeter-wave radar provided according to the present invention includes:

step S1: extracting a ground point cloud, and comparing two consecutive frames of point clouds, to remove ghost points below the ground and random points;

step S2: estimating a linear velocity and an angular velocity of a device based on Doppler velocity information in a 4D radar point cloud; and

step S3: estimating and constructing a pose graph using a relative pose transformation that is obtained through point cloud registration performed based on a normal distribution transformation, pre-integration performed using an estimated device velocity, and loop closure detection; and estimating an optimal pose through graph optimization.

Preferably, in step S1,
the ground point cloud is extracted, and the two consecutive frames of point clouds are compared, to remove the ghost points below the ground and the unstable random points, so as to reduce noise in the 4D radar point cloud, where step S1 includes the following steps:

step S1.1: ghost point removal, where the ground point cloud is extracted from an original radar point cloud and the ghost points below the ground are filtered out;

for the original radar point cloud $\mathcal{P} = \{P_i\}$, $i \in \{1, 2, ..., n\}$ measured by a 4D radar, $n$ is a number of points in the point cloud;

a position of each point in a radar coordinate system is expressed as $\mathbf{P}_i = (x_i, y_i, z_i)^T = (r_i \cos \theta_i \cos \varphi_i, r_i \sin \theta_i \cos \varphi_i, r_i \sin (\varphi_i))^T$, where $r_i$ is a distance of the point measured by the 4D radar, $\theta_i$ is an azimuth angle of the point measured by the 4D radar, and $\varphi_i$ is an elevation angle of the point measured by the 4D radar; and

for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

step S1.2: random point removal, where the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t$$

$$R_{k-1} = \mathrm{Exp}(\tilde{\omega}_{k-1}\Delta t)$$

where $\tilde{v}_{k-1}$ and $\tilde{\omega}_{k-1}$ are respectively a device linear velocity estimate and a device angular velocity estimate of the previous frame, $\Delta t$ is a time difference between the two frames, $\mathrm{Exp}(\cdot){:}R^3 \to SO(3)$ is an exponential mapping of a three-dimensional rotation, $R^3$ is a three-dimensional real number vector space, $SO(3)$ is a three-dimensional special

orthogonal group , and $\mathcal{P}'_{k-1}$ is obtained by transforming the previous frame of point cloud into the coordinate system of the current frame using $R_{k-1}$ and $t_{k-1}$; andif no point in $\mathcal{P}'_{k-1}$ exists within a preset range of a point in the current frame, the current point is classified as a random point and filtered out.

Preferably, in step S2, the following steps are included:

step S2.1: static point extraction, where for an $i^{th}$ point in the 4D radar point cloud, a relationship between a Doppler velocity of the point and a velocity of the radar is as follows:

$$v_{r,i} = -d_i \cdot v_s$$

where $v_{r,i}$ is the Doppler velocity of the $i^{th}$ point, $\boldsymbol{d}_i = (\cos \theta_i \cos \varphi_i, \sin \theta_i \cos \varphi_i, \sin \varphi_i)^T$ is a unit direction vector of the point relative to the radar, and $v_s$ is the velocity of the radar; and
a relationship between the velocity of the radar and the device velocity is as follows:

$$\boldsymbol{v}_s = \boldsymbol{R}_s^T(\widetilde{\boldsymbol{v}} + \widetilde{\boldsymbol{\omega}} \times \boldsymbol{t}_s)$$

where $t_s$ and $R_s$ are respectively a mounting position and a pose of the 4D radar in a device coordinate system, $\widetilde{\boldsymbol{v}} \in \boldsymbol{R}^3$ and $\widetilde{\omega} \in \boldsymbol{R}^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} \boldsymbol{d}_i^T \\ \vdots \\ \boldsymbol{d}_m^T \end{bmatrix} \boldsymbol{R}_s^T [\boldsymbol{I}_{3\times3} \quad -\boldsymbol{t}_s^\wedge] \begin{bmatrix} \widetilde{\boldsymbol{v}} \\ \widetilde{\boldsymbol{\omega}} \end{bmatrix},$$

where m is a number of all the static points in the point cloud, $I_{3\times3}$ is a $3 \times 3$ unit matrix, $\boldsymbol{t}_s^\wedge \in \boldsymbol{R}^{3\times3}$ is an antisymmetric matrix of $t_s$, $R^{3\times3}$ represents a set of $3 \times 3$ real matrices, and dynamic outliers are removed and the static points are extracted based on relationships between Doppler velocities of all the static points in the radar point cloud and the device velocity using the random sample consensus algorithm; and
step S2.2: least squares estimation, where after the static points are extracted, the device velocity is computed based on the relationships between the Doppler velocities of all the static points and the device velocity using the least square method.

Preferably, in step S3,
pose graph optimization is performed, where the pose graph is estimated and constructed using the relative pose transformation that is obtained through the point cloud registration, the velocity pre-integration, and the loop closure detection; and finally the optimal pose is estimated through the graph optimization, where the following steps are included:

step S3.1: point cloud registration based on the normal distribution transformation, where a relative transformation is estimated by matching between a current 4D radar point cloud and a keyframe submap;
a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and
after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, where an error of estimation of the pose transformation is $e_O$; and

step SQ.: velocity pre-integration, where the relative pose transformation is computed based on the estimated device velocity, so that an additional reliable relative pose estimate is introduced, and a device linear velocity and a device angular velocity that are estimated at a moment t are respectively denoted as $\tilde{v}_t$ and $\tilde{\omega}_t$, with their estimated values being true values each plus a zero-mean Gaussian white noise:

$$\tilde{\omega}_t = \omega_t + \eta_t^{\omega},$$

$$\tilde{v}_t = R_{t\,W}^T v_t + \eta_t^{v},$$

where $\omega_t$ and $_W v_t$ are respectively the true values of the angular velocity and the linear velocity in a world coordinate system, $\eta_t^{\omega}$ and $\eta_t^{v}$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

Preferably, step S3.3 includes loop closure detection, where a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

step S3.4 includes graph optimization, where the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments; and all the poses are expressed as $X = \{x_i\}$, $i \in \mathcal{K}$, and the optimal pose .$X'^*$ is estimated by solving a nonlinear least squares problem:

$$X^* = \arg\min_X e_O + e_V + e_L$$

where $\mathcal{K}$ includes all moments, and $e_O$, $e_V$, $e_L$ respectively correspond to the errors of relative pose transformations obtained in different steps.

A pose graph SLAM computation system based on a 4D millimeter-wave radar provided according to the present invention includes:

a module M1 configured to extract a ground point cloud, and compare two consecutive frames of point clouds, to remove ghost points below the ground and random points;
a module M2 configured to estimate a linear velocity and an angular velocity of a device based on Doppler velocity information in a 4D radar point cloud; and
a module M3 configured to estimate and construct a pose graph using a relative pose transformation that is obtained through point cloud registration performed based on a normal distribution transformation, pre-integration performed using an estimated device velocity, and loop closure detection; and estimate an optimal pose through graph optimization.

Preferably, in the module M1,

the ground point cloud is extracted, and the two consecutive frames of point clouds are compared, to remove the ghost points below the ground and the unstable random points, so as to reduce noise in the 4D radar point cloud, where

a module M1.1 is configured to perform the following operation: ghost point removal, where the ground point cloud is extracted from an original radar point cloud and the ghost points below the ground are filtered out;

for the original radar point cloud $\mathcal{P} = \{\mathbf{P}_i\}$, $i \in \{1, 2, ..., n\}$ measured by a 4D radar, $n$ is a number of points in the point cloud;

a position of each point in a radar coordinate system is expressed as $\mathbf{P}_i = (x_i, y_i, z_i)^T = (r_i \cos\theta_i \cos\varphi_i, r_i \sin\theta_i \cos\varphi_i, r_i \sin\varphi_i)^T$, where $r_i$ is a distance of the point measured by the 4D radar, $\theta_i$ is an azimuth angle of the point measured by the 4D radar, and $\varphi_i$ is an elevation angle of the point measured by the 4D radar; and

for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

a module M1.2 is configured to perform the following operation: random point removal, where the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t$$

$$R_{k-1} = \mathrm{Exp}(\tilde{\omega}_{k-1}\Delta t)$$

where $\tilde{v}_{k-1}$ and $\tilde{\omega}_{k-1}$ are respectively a device linear velocity estimate and a device angular velocity estimate of the previous frame, $\Delta t$ is a time difference between the two frames, $\mathrm{Exp}(\cdot): R^3 \to SO(3)$ is an exponential mapping of a three-dimensional rotation, $R^3$ is a three-dimensional real number vector space, $SO(3)$ is a three-dimensional special orthogonal group , and $\mathcal{P}'_{k-1}$ is obtained by transforming the previous frame of point cloud into the coordinate system of the current frame using $R_{k-1}$ and $t_{k-1}$; andif no point in $\mathcal{P}'_{k-1}$ exists within a preset range of a point in the current frame, the current point is classified as a random point and filtered out.

Preferably, in the module M2,

a module M2.1 is configured to perform the following operation: static point extraction, where for an $i^{th}$ point in the 4D radar point cloud, a relationship between a Doppler velocity of the point and a velocity of the radar is as follows:

$$v_{r,i} = -d_i \cdot v_s$$

where $v_{r,i}$ is the Doppler velocity of the $i^{th}$ point, $d_i = (\cos\theta_i \cos\varphi_i, \sin\theta_i \cos\varphi_i, \sin\varphi_i)^T$ is a unit direction vector of the point relative to the radar, and $v_s$ is the velocity of the radar; and

a relationship between the velocity of the radar and the device velocity is as follows:

$$v_s = R_s^T(\tilde{v} + \tilde{\omega} \times t_s)$$

where $t_s$ and $R_s$ are respectively a mounting position and a pose of the 4D radar in a device coordinate system, $\tilde{v}$

$\in \boldsymbol{R}^3$ and $\tilde{\omega} \in \boldsymbol{R}^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} \boldsymbol{d}_i^T \\ \vdots \\ \boldsymbol{d}_m^T \end{bmatrix} \boldsymbol{R}_s^T [\boldsymbol{I}_{3\times3} \quad -\boldsymbol{t}_s^\wedge] \begin{bmatrix} \tilde{\boldsymbol{v}} \\ \tilde{\boldsymbol{\omega}} \end{bmatrix},$$

where m is a number of all the static points in the point cloud, $I_{3\times3}$ is a $3 \times 3$ unit matrix, $\boldsymbol{t}_s^\wedge \in \boldsymbol{R}^{3\times3}$ is an antisymmetric matrix of $t_s$, $R^{3\times3}$ represents a set of $3 \times 3$ real matrices, and dynamic outliers are removed and the static points are extracted based on relationships between Doppler velocities of all the static points in the radar point cloud and the device velocity using the random sample consensus algorithm; and
a module M2.2 is configured to perform the following operation: least squares estimation, where after the static points are extracted, the device velocity is computed based on the relationships between the Doppler velocities of all the static points and the device velocity using the least square method.

Preferably, in the module M3,
pose graph optimization is performed, where the pose graph is estimated and constructed using the relative pose transformation that is obtained through the point cloud registration, the velocity pre-integration, and the loop closure detection; and finally the optimal pose is estimated through the graph optimization, where

a module M3.1 is configured to perform the following operation: point cloud registration based on the normal distribution transformation, where a relative transformation is estimated by matching between a current 4D radar point cloud and a keyframe submap;
a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and
after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, where an error of estimation of the pose transformation is $e_O$; and
a module M3.2 is configured to perform the following operation: velocity pre-integration, where the relative pose transformation is computed based on the estimated device velocity, so that an additional reliable relative pose estimate is introduced, and a device linear velocity and a device angular velocity that are estimated at a moment t are respectively denoted as $\tilde{v}_t$ and $\tilde{\omega}_t$, with their estimated values being true values each plus a zero-mean Gaussian white noise:

$$\tilde{\boldsymbol{\omega}}_t = \boldsymbol{\omega}_t + \boldsymbol{\eta}_t^\omega,$$

$$\tilde{\boldsymbol{v}}_t = \boldsymbol{R}_t^T {}_W\boldsymbol{v}_t + \boldsymbol{\eta}_t^v,$$

where $\omega_t$ and ${}_W v_t$ are respectively the true values of the angular velocity and the linear velocity in a world coordinate system, $\boldsymbol{\eta}_t^\omega$ and $\boldsymbol{\eta}_t^v$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

Preferably, a module M3.3 is configured to perform the following operation: loop closure detection, where a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

a module M3.4 is configured to perform the following operation: graph optimization, where the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments;

and all the poses are expressed as $\boldsymbol{X} = \{\boldsymbol{x}_i\}$, $i \in \mathcal{K}$, and the optimal pose $\boldsymbol{X}^*$ is estimated by solving a nonlinear least squares problem:

$$\boldsymbol{X}^* = \arg\min_{\boldsymbol{X}} \boldsymbol{e}_O + \boldsymbol{e}_V + \boldsymbol{e}_L$$

where $\mathcal{K}$ includes all moments, and $e_O$, $e_V$, $e_L$ respectively correspond to the errors of relative pose transformations obtained in different steps.

Compared with the prior art, the present invention has the following beneficial effects:

1. In order to achieve better accuracy in the case of the sparse point cloud, the present invention pre-integrates the estimated ego vehicle velocity, to obtain the additional relative pose estimate.
2. The present invention introduces the loop closure detection to identify places that have been reached again, thereby optimizing historical poses from a global perspective, to reduce a cumulative drift and implement accurate and robust mapping and localization.
3. The present invention can use the 4D millimeter-wave radar to perform accurate and robust synchronous positioning and mapping in an unknown environment.

BRIEF DESCRIPTION OF DRAWINGS

Other features, objectives, and advantages of the present invention will become more apparent by reading the detailed description of non-limiting embodiments with reference to the following accompanying drawing, in which:

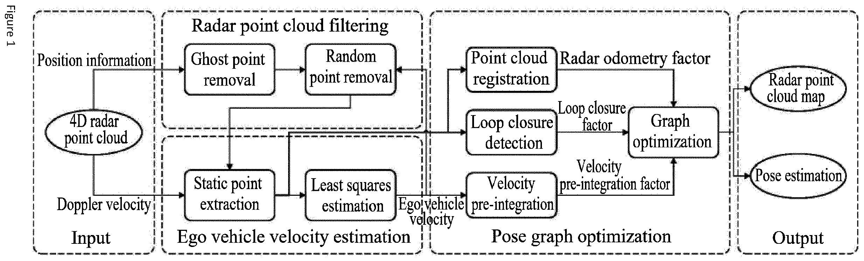

FIG. 1 is a schematic flowchart of a method according to the present invention.

DETAILED DESCRIPTION OF THE INVENTION

The present invention is described in detail in combination with specific embodiments as below. The following embodiments will help those skilled in the art to further understand the present invention, but do not limit the present invention in any way. It should be noted that a person of ordinary skill in the art may also make several changes and improvements without departing from the concept of the present invention. These all belong to the scope of protection of the present invention.

Embodiment 1:

In view of the previous work, the present invention innovatively proposes a pose graph SLAM algorithm based on a 4D millimeter-wave radar. This algorithm may be applied to manned intelligent wheelchairs, autonomous vehicles, and the like to implement accurate and robust synchronous positioning and mapping tasks.
The present invention provides a pose graph SLAM algorithm based on a 4D millimeter-wave radar. The algorithm includes three modules: a radar point cloud filtering module, an ego vehicle velocity estimation module, and a pose graph optimization module. Aiming at the problem of large noise in a 4D millimeter-wave radar (4D radar) point cloud, a filtering step is designed to reduce ghost points and random noise in the original 4D radar point cloud. Next, an ego vehicle velocity is estimated from the Doppler velocity in the filtered point cloud, which plays an important role in subsequent pose graph optimization. In the pose graph optimization, radar odometry is implemented through point cloud registration based on a normal distribution transformation, to estimate a relative pose transformation. In order to achieve better accuracy in the case of a sparse point cloud, the estimated ego vehicle velocity is pre-integrated, to obtain an additional relative pose estimate. In addition, loop closure detection is introduced to identify places that have been reached again, and historical poses are optimized from a global perspective, to reduce a cumulative drift and implement accurate and robust mapping and localization.

The pose graph SLAM computation method based on a 4D millimeter-wave radar provided according to the present invention, as shown in FIG. 1, includes:

step S1: extracting a ground point cloud, and comparing two consecutive frames of point clouds, to remove ghost points below the ground and random points.

Specifically, in step S1,

the ground point cloud is extracted, and the two consecutive frames of point clouds are compared, to remove the ghost points below the ground and the unstable random points, so as to reduce noise in the 4D radar point cloud, where step S1 includes the following steps:

step S1.1: ghost point removal, where the ground point cloud is extracted from an original radar point cloud and the ghost points below the ground are filtered out;

for the original radar point cloud $\mathcal{P} = \{\mathbf{P}_i\}$, $i \in \{1, 2, ..., n\}$ measured by a 4D radar, n is a number of points in the point cloud;

a position of each point in a radar coordinate system is expressed as $\mathbf{P}_i = (x_i, y_i, z_i)^T = (r_i \cos \theta_i \cos \varphi_i, r_i \sin \theta_i \cos \varphi_i, r_i \sin \varphi_i)^T$, where $r_i$ is a distance of the point measured by the 4D radar, $\theta_i$ is an azimuth angle of the point measured by the 4D radar, and $\varphi_i$ is an elevation angle of the point measured by the 4D radar; and

for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

step S1.2: random point removal, where the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t$$

$$R_{k-1} = \mathrm{Exp}(\tilde{\omega}_{k-1}\Delta t)$$

where $\tilde{v}_{k-1}$ and $\tilde{\omega}_{k-1}$ are respectively a device linear velocity estimate and a device angular velocity estimate of the previous frame, $\Delta t$ is a time difference between the two frames, $\mathrm{Exp}(\cdot)$: $R^3 \to SO(3)$ is an exponential mapping of a three-dimensional rotation, $R^3$ is a three-dimensional real number vector space, $SO(3)$ is a three-dimensional special orthogonal group , and $\mathcal{P}'_{k-1}$ is obtained by transforming the previous frame of point cloud into the coordinate system of the current frame using $R_{k-1}$ and $t_{k-1}$; andif no point in $\mathcal{P}'_{k-1}$ exists within a preset range of a point in the current frame, the current point is classified as a random point and filtered out.

Step S2 includes: estimating a linear velocity and an angular velocity of a device based on Doppler velocity information in a 4D radar point cloud.

Specifically, step S2 includes:

step S2.1: static point extraction, where for an $i^{th}$ point in the 4D radar point cloud, a relationship between a Doppler velocity of the point and a velocity of the radar is as follows:

$$v_{r,i} = -d_i \cdot v_s$$

where $v_{r,i}$ is the Doppler velocity of the $i^{th}$ point, $\boldsymbol{d}_i = (\cos \theta_i \cos \varphi_i, \sin \theta_i \cos \varphi_i, \sin \varphi_i)^T$ is a unit direction vector of the point relative to the radar, and $v_s$ is the velocity of the radar; and
a relationship between the velocity of the radar and the device velocity is as follows:

$$v_s = \boldsymbol{R}_s^T (\tilde{\boldsymbol{v}} + \tilde{\omega} \times \boldsymbol{t}_s)$$

where $t_s$ and $R_s$ are respectively a mounting position and a pose of the 4D radar in a device coordinate system, $\tilde{\boldsymbol{v}} \in \boldsymbol{R}^3$ and $\tilde{\omega} \in \boldsymbol{R}^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} \boldsymbol{d}_i^T \\ \vdots \\ \boldsymbol{d}_m^T \end{bmatrix} \boldsymbol{R}_s^T [\boldsymbol{I}_{3\times3} \quad -\boldsymbol{t}_s^\wedge] \begin{bmatrix} \tilde{\boldsymbol{v}} \\ \tilde{\boldsymbol{\omega}} \end{bmatrix},$$

where m is a number of all the static points in the point cloud, $I_{3\times3}$ is a 3 × 3 unit matrix, $\boldsymbol{t}_s^\wedge \in \boldsymbol{R}^{3\times3}$ is an antisymmetric matrix of $t_s$, $R^{3\times3}$ represents a set of 3 × 3 real matrices, and dynamic outliers are removed and the static points are extracted based on relationships between Doppler velocities of all the static points in the radar point cloud and the device velocity using the random sample consensus algorithm; and
step S2.2: least squares estimation, where after the static points are extracted, the device velocity is computed based on the relationships between the Doppler velocities of all the static points and the device velocity using the least square method.

Step S3 includes: estimating and constructing a pose graph using a relative pose transformation that is obtained through point cloud registration performed based on a normal distribution transformation, pre-integration performed using an estimated device velocity, and loop closure detection; and estimating an optimal pose through graph optimization.
Specifically, in step S3,

pose graph optimization is performed, where the pose graph is estimated and constructed using the relative pose transformation that is obtained through the point cloud registration, the velocity pre-integration, and the loop closure detection; and finally the optimal pose is estimated through the graph optimization, where the following steps are included:
step S3.1: point cloud registration based on the normal distribution transformation, where a relative transformation is estimated by matching between a current 4D radar point cloud and a keyframe submap;
a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and
after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, where an error of estimation of the pose transformation is $e_O$; and
step S3.2: velocity pre-integration, where the relative pose transformation is computed based on the estimated device velocity, so that an additional reliable relative pose estimate is introduced, and a device linear velocity and a device angular velocity that are estimated at a moment t are respectively denoted as $\tilde{\boldsymbol{v}}_t$ and $\tilde{\omega}_t$, with their estimated values being true values each plus a zero-mean Gaussian white noise:

$$\tilde{\omega}_t = \omega_t + \boldsymbol{\eta}_t^\omega,$$

$$\tilde{v}_t = R_t^T {}_W v_t + \eta_t^v,$$

where $\omega_t$ and ${}_W v_t$ are respectively the true values of the angular velocity and the linear velocity in a world coordinate system, $\eta_t^\omega$ and $\eta_t^v$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

Specifically, step S3.3 includes: loop closure detection, where a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

step S3.4 includes: graph optimization, where the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments; and all the poses are expressed as $X = \{x_i\}$, $i \in \mathcal{K}$, and the optimal pose .X'* is estimated by solving a nonlinear least squares problem:

$$X^* = \arg\min_{X} e_O + e_V + e_L$$

where $\mathcal{K}$ includes all moments, and $e_O$, $e_V$, $e_L$ respectively correspond to the errors of relative pose transformations obtained in different steps.

Embodiment 2:

Embodiment 2 is a preferred example of Embodiment 1 to illustrate the present invention more specifically.
The present invention further provides a pose graph SLAM computation system based on a 4D millimeter-wave radar. The pose graph SLAM computation system based on a 4D millimeter-wave radar may be implemented by performing process steps of the pose graph SLAM computation method based on a 4D millimeter-wave radar, that is, those skilled in the art may understand the pose graph SLAM computation method based on a 4D millimeter-wave radar as a preferred implementation of the pose graph SLAM computation system based on a 4D millimeter-wave radar.
The pose graph SLAM computation system based on a 4D millimeter-wave radar provided according to the present invention includes a module M1, a module M2, and a module M3.
The module M1 is configured to extract a ground point cloud, and compare two consecutive frames of point clouds, to remove ghost points below the ground and random points.
Specifically, in the module M1,

the ground point cloud is extracted, and the two consecutive frames of point clouds are compared, to remove the ghost points below the ground and the unstable random points, so as to reduce noise in the 4D radar point cloud, where a module M1.1 is configured to perform the following operation: ghost point removal, where the ground point cloud is extracted from an original radar point cloud and the ghost points below the ground are filtered out;
for the original radar point cloud $\mathcal{P} = \{P_i\}$, $i \in \{1, 2, ..., n\}$ measured by a 4D radar, $n$ is a number of points in the point cloud;
a position of each point in a radar coordinate system is expressed as $P_i = (x_i, y_i, z_i)^T = (r_i \cos\theta_i \cos\varphi_i, r_i \sin\theta_i \cos\varphi_i, r_i \sin\varphi_i)^T$, where $r_i$ is a distance of the point measured by the 4D radar, $\theta_i$ is an azimuth angle of the point measured by the 4D radar, and $\varphi_i$ is an elevation angle of the point measured by the 4D radar; and
for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

a module M1.2 is configured to perform the following operation: random point removal, where the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t$$

$$R_{k-1} = \text{Exp}(\tilde{\omega}_{k-1}\Delta t)$$

where $\tilde{v}_{k-1}$ and $\tilde{\omega}_{k-1}$ are respectively a device linear velocity estimate and a device angular velocity estimate of the previous frame, $\Delta t$ is a time difference between the two frames, $\text{Exp}(\cdot): R^3 \to SO(3)$ is an exponential mapping of a three-dimensional rotation, $R^3$ is a three-dimensional real number vector space, $SO(3)$ is a three-dimensional special orthogonal group , and $\mathcal{P}'_{k-1}$ is obtained by transforming the previous frame of point cloud into the coordinate system of the current frame using $R_{k-1}$ and $t_{k-1}$; and if no point in $\mathcal{P}'_{k-1}$ exists within a preset range of a point in the current frame, the current point is classified as a random point and filtered out.

The module M2 is configured to estimate a linear velocity and an angular velocity of a device based on Doppler velocity information in a 4D radar point cloud.

Specifically, in the module M2,

a module M2.1 is configured to perform the following operation: static point extraction, where for an $i^{th}$ point in the 4D radar point cloud, a relationship between a Doppler velocity of the point and a velocity of the radar is as follows:

$$v_{r,i} = -d_i \cdot v_s$$

where $v_{r,i}$ is the Doppler velocity of the $i^{th}$ point, $d_i = (\cos\theta_i\cos\varphi_i, \sin\theta_i\cos\varphi_i, \sin\varphi_i)^T$ is a unit direction vector of the point relative to the radar, and $v_s$ is the velocity of the radar; and
a relationship between the velocity of the radar and the device velocity is as follows:

$$v_s = R_s^T(\tilde{v} + \tilde{\omega} \times t_s)$$

where $t_s$ and $R_s$ are respectively a mounting position and a pose of the 4D radar in a device coordinate system, $\tilde{v} \in R^3$ and $\tilde{\omega} \in R^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} d_i^T \\ \vdots \\ d_m^T \end{bmatrix} R_s^T [I_{3\times3} \quad -t_s^\wedge] \begin{bmatrix} \tilde{v} \\ \tilde{\omega} \end{bmatrix},$$

where m is a number of all the static points in the point cloud, $I_{3\times3}$ is a 3 × 3 unit matrix, $t_s^\wedge \in R^{3\times3}$ is an antisymmetric matrix of $t_s$, $R^{3\times3}$ represents a set of 3 × 3 real matrices, and dynamic outliers are removed and the static points are extracted based on relationships between Doppler velocities of all the static points in the radar point cloud and the device velocity using the random sample consensus algorithm; and

a module M2.2 is configured to perform the following operation: least squares estimation, where after the static points are extracted, the device velocity is computed based on the relationships between the Doppler velocities of all the static points and the device velocity using the least square method.

The module M3 is configured to estimate and construct a pose graph using a relative pose transformation that is obtained through point cloud registration performed based on a normal distribution transformation, pre-integration performed using an estimated device velocity, and loop closure detection; and estimate an optimal pose through graph optimization.

Specifically, in the module M3,

pose graph optimization is performed, where the pose graph is estimated and constructed using the relative pose transformation that is obtained through the point cloud registration, the velocity pre-integration, and the loop closure detection; and finally the optimal pose is estimated through the graph optimization, where

a module M3.1 is configured to perform the following operation: point cloud registration based on the normal distribution transformation, where a relative transformation is estimated by matching between a current 4D radar point cloud and a keyframe submap;

a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and

after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, where an error of estimation of the pose transformation is $e_O$; and

a module M3.2 is configured to perform the following operation: velocity pre-integration, where the relative pose transformation is computed based on the estimated device velocity, so that an additional reliable relative pose estimate is introduced, and a device linear velocity and a device angular velocity that are estimated at a moment t are respectively denoted as $\tilde{v}_t$ and $\tilde{\omega}_t$, with their estimated values being true values each plus a zero-mean Gaussian white noise:

$$\tilde{\omega}_t = \omega_t + \eta_t^\omega,$$

$$\tilde{v}_t = R_{t\,W}^T v_t + \eta_t^v,$$

where $\omega_t$ and $_W v_t$ are respectively the true values of the angular velocity and the linear velocity in a world coordinate system, $\eta_t^\omega$ and $\eta_t^v$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

Specifically, a module M3.3 is configured to perform the following operation: loop closure detection, where a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

a module M3.4 is configured to perform the following operation: graph optimization, where the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments;

and all the poses are expressed as $X = \{x_i\}$, $i \in \mathcal{K}$, and the optimal pose $.X'^*$ is estimated by solving a nonlinear least squares problem:

$$\mathcal{X}^* = \arg \min_{\mathcal{X}} e_O + e_V + e_L$$

where $\mathcal{K}$ includes all moments, and $e_O$, $e_V$, $e_L$ respectively correspond to the errors of relative pose transformations obtained in different steps.

Embodiment 3:

Embodiment 3 is a preferred example of Embodiment 1 to illustrate the present invention more specifically.
In view of the shortcomings of the existing technology, this specification innovatively proposes a pose graph SLAM algorithm based on a 4D millimeter-wave radar, which is suitable for the synchronous positioning and mapping issue of vehicles or mobile robots in an unknown environment.
The pose graph SLAM algorithm based on a 4D millimeter-wave radar provided according to the present invention mainly includes the following steps:

step 1: radar point cloud filtering, where an original 4D radar point cloud mainly contains two types of noise: ghost points and random points, a ground point cloud is extracted, and two consecutive frames of point clouds are compared, to remove ghost points below the ground and unstable random points, so as to reduce noise in the 4D radar point cloud;
step 2: ego vehicle velocity estimation, where a 4D millimeter-wave radar can obtain a Doppler velocity of each point, and the Doppler velocity is a radial component of a relative velocity between the radar and a target point; and a linear velocity and an angular velocity of an ego vehicle are estimated based on Doppler velocity information in a 4D radar point cloud; and
step 3: pose graph optimization, where a current radar point cloud is registered with a local radar keyframe submap based on a normal distribution transformation, so as to obtain a radar odometry factor; pre-integration is performed using an estimated ego vehicle velocity, so as to obtain a velocity pre-integration factor; and loop closure detection is performed to obtain a loop closure factor. Finally, the three factors are used to construct a pose graph, and an optimal pose is estimated based on graph optimization.

Specifically, the radar point cloud filtering process in step 1 mainly includes the following steps.
In step 1.1, ghost point removal is performed, where ghost points are false measurements below the ground in the original 4D radar point cloud caused by the multipath effect of millimeter waves, and they are one of 4D radar measurement noises. The ground point cloud is extracted from the original radar point cloud and then the ghost points below the ground are filtered out.

For the original radar point cloud $\mathcal{P} = \{\mathbf{P}_i\}$, $i \in \{1, 2, ..., n\}$ obtained by the 4D radar, $n$ is a number of points in the point cloud, a position of each point in a radar coordinate system may be expressed as $\mathbf{P}_i = (x_i, y_i, z_i)^T = (r_i \cos \theta_i \cos \varphi_i, r_i \sin \theta_i \cos \varphi_i, r_i \sin \varphi_i)^T$, and $r_i$, $\theta_i$, $\varphi_i$ are spatial information of the point measured by the 4D radar: a distance, an azimuth angle, and an elevation angle. For the original radar point cloud, a point with a distance less than a threshold $\delta_r$ and a height within a threshold $\delta_h$ near a mounting height H of the radar is first retained, that is, for all $\mathbf{P}_i \in \mathcal{P}_k$, points

that meet $\sqrt{x_i^2 + y_i^2 + z_i^2} \leq \delta_r$ and $z_i \in [-H - \Delta_h, -H + \Delta_h]$ are retained, because these points are most likely to belong to the ground. Then, an upward normal vector $n_i$ of each point is estimated using a principal component analysis method. Next, a point with a normal vector having an angle less than $\delta_n$ with a z-axis positive unit vector is retained, that is, a point that meets $n_i \cdot (0,0,1)^T \geq \cos \delta_n$ is retained. Finally, a plane $Ax + By + Cz + D = 0$ is extracted using a random sample consensus algorithm, the plane is considered as the ground, and the ghost points below the ground are filtered out, that is, points that meet $Ax_i + By_i + Cz_i + D < 0$ are filtered out.

In step 1.2, random point removal is performed, where random points are unstable and flickering false measurements contained in the original 4D radar point cloud, and are one of the measurement noises of the 4D radar. Since random points do not appear continuously in a plurality of consecutive frames of radar point clouds, random points are identified and filtered out by comparing a current point cloud and a previous frame of point cloud adjacent to the current point cloud.

First, a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t,$$

$$\boldsymbol{R}_{k-1} = \mathrm{Exp}(\tilde{\omega}_{k-1}\Delta t),$$

where $\tilde{v}_{k-1}$ and $\tilde{\omega}_{k-1}$ are respectively an ego vehicle linear velocity estimate and an ego vehicle angular velocity estimate of the previous frame, $\Delta t$ is a time difference between the two frames, and $\mathrm{Exp}(\cdot) : R^3 \rightarrow SO(3)$ is an exponential mapping of a three-dimensional rotation ($R^3$ is a three-dimensional real number vector space, and $SO(3)$ is a three-dimensional special orthogonal group). Then, $\mathcal{P}'_{k-1}$ is obtained by transforming the previous frame of point cloud into the coordinate system of the current frame using $R_{k-1}$ and $t_{k-1}$. If no point in $\mathcal{P}'_{k-1}$ exists near a point in the current frame, the current point is classified as a random point and filtered out.

Specifically, the ego vehicle velocity estimation process in step 2 mainly includes the following steps.

In step 2.1, static point extraction is performed. In addition to spatial information, the 4D radar can also obtain a Doppler velocity of each point in the point cloud. For an $i^{th}$ point in the 4D radar point cloud, if it is a stationary point with an absolute velocity of 0 in the real world, then its relative velocity to the radar is equal in magnitude and opposite in direction to the velocity of the radar. The Doppler velocity is a radial component of a relative velocity between the measured point and the 4D radar. Therefore, a relationship between the Doppler velocity of this point and the velocity of the radar is as follows:

$$v_{r,i} = -d_i \cdot v_s,$$

where $v_{r,i}$ is the Doppler velocity of the $i^{th}$ point, $\boldsymbol{d}_i = (\cos\theta_i \cos\varphi_i, \sin\theta_i \cos\varphi_i, \sin\varphi_i)^T$ is a unit direction vector of the point relative to the radar, and $v_s$ is the velocity of the radar.

In addition, since the 4D radar is mounted on a vehicle, a relationship between the velocity of the radar and an ego vehicle velocity of the vehicle is as follows:

$$\boldsymbol{v}_s = \boldsymbol{R}_s^T(\tilde{v} + \tilde{\omega} \times \boldsymbol{t}_s),$$

where $t_s$ and $R_s$ are respectively a mounting position and a pose of the 4D radar in a vehicle coordinate system, and $\tilde{v} \in \boldsymbol{R}^3$ and $\tilde{\omega} \in \boldsymbol{R}^3$ are respectively an ego vehicle linear velocity and an ego vehicle angular velocity. In the real world, most points in the 4D radar point cloud are static points. Therefore, for all static points in the 4D radar point cloud, the Doppler velocity and the ego vehicle velocity both conform to the following equation:

$$-\begin{bmatrix} v_{r,1} \\ \vdots \\ v_{r,m} \end{bmatrix} = \begin{bmatrix} d_i^T \\ \vdots \\ d_m^T \end{bmatrix} R_s^T [I_{3\times 3} \quad -t_s^\wedge] \begin{bmatrix} \tilde{v} \\ \tilde{\omega} \end{bmatrix},$$

where m is a number of all the static points in the point cloud, $I_{3\times3}$ is a $3 \times 3$ unit matrix, and $t_s^{\wedge} \in R^{3\times3}$ is an antisymmetric matrix of $t_s$ ($R^{3\times3}$ represents a set of $3 \times 3$ real matrices). Dynamic outliers are removed and the static points are extracted based on relationships between Doppler velocities of all the static points in the radar point cloud and the ego vehicle velocity using the random sample consensus algorithm.

In step 2.2, least squares estimation is performed, where after the static points are extracted, the ego vehicle velocity is estimated based on the relationships between the Doppler velocities of all the static points and the ego vehicle velocity again using the least square method.

Specifically, the pose graph optimization process in step 3 mainly includes the following steps.

In step 3.1, point cloud registration is performed based on the normal distribution transformation, where the relative transformation is estimated by direct matching between a current 4D radar point cloud and a keyframe submap.

Due to that the 4D radar point cloud is too sparse, it is impossible to correctly estimate a pose only by matching of a single frame of point cloud. Therefore, a sliding window method is used to establish a denser radar submap using a plurality of keyframe point clouds. Specifically, if a translation or rotation from a last keyframe to a current point cloud exceeds a threshold, a current frame is selected as a new keyframe. Then, the new keyframe is added to the radar submap, and a node associated with the keyframe is added to the pose graph. When a number of keyframes in the submap exceeds a size of the window, the earliest keyframe is discarded. The radar submap established through this method can reflect local environmental features more clearly than a single frame of radar point cloud, improving the accuracy and robustness of point cloud registration.

After the radar submap is established, the submap is evenly divided into grids of a same size, and a point cloud in each grid is modeled as a local normal distribution. Due to the highly sparse 4D radar point cloud, a case where there are less than three points in a grid or points in the grid are collinear (coplanar) may easily occur after grid division, making it difficult to invert the covariance of the normal distribution. Therefore, measurement uncertainty of each point is comprehensively considered when computing a mean and a covariance of the normal distribution. An advantage of this is to reduce the degeneration effect of covariance, and point cloud information in a grid can be fully used even when there are very few points in the grid. Then, the current 4D radar point cloud is registered with the radar submap to estimate a relative pose transformation that maximizes a distribution probability of the current point cloud in the submap, and the relative pose transformation is added to the pose graph as a radar odometry factor. An error of estimation of the pose transformation is $e_O$.

In step 3.2, velocity pre-integration is performed, where the relative pose transformation is computed using the estimated ego vehicle velocity, so that an additional reliable relative pose estimate is introduced, improving the accuracy and robustness of SLAM. An ego vehicle linear velocity and an ego vehicle angular velocity that are estimated at a moment t are respectively denoted as $\tilde{v}_t$ and $\tilde{\omega}_t$, with their estimated values being true values each plus a zero-mean Gaussian white noise, that is:

$$\tilde{\omega}_t = \omega_t + \eta_t^{\omega},$$

$$\tilde{v}_t = R_t^T{}_W v_t + \eta_t^v,$$

where $\omega_t$ and $_W V_t$ are respectively the true values of the angular velocity and the linear velocity in a world coordinate system, $\eta_t^{\omega}$ and $\eta_t^v$ are corresponding noise terms, and $R_t$ is an orientation of the vehicle in the world coordinate system. From this, a relative rotation transformation $\Delta R_{ij}$ and a relative translation transformation $\Delta p_{ij}$ between a moment i and a moment j can be obtained:

$$\Delta R_{ij} = R_i^T R_j = \prod_{k=i}^{j-1} \mathrm{Exp}\left((\widetilde{\omega}_k - \eta_k^\omega)\Delta t\right)$$

$$= \underbrace{\prod_{k=i}^{j-1} \mathrm{Exp}(\widetilde{\omega}_k \Delta t)}_{\Delta\widetilde{R}_{ij}} \underbrace{\prod_{k=i}^{j-1} \mathrm{Exp}\left(-\Delta\widetilde{R}_{k+1,j}^T J_{r,k}\eta_k^\omega \Delta t\right)}_{\mathrm{Exp}(-\delta\phi_{ij})},$$

$$\Delta p_{ij} = R_i^T(p_j - p_i) = \sum_{k=i}^{j-1} \Delta R_{ik}(\widetilde{v}_k - \eta_k^v)\Delta t$$

$$= \underbrace{\sum_{k=i}^{j-1} \Delta\widetilde{R}_{ik}\widetilde{v}_k \Delta t}_{\Delta\widetilde{p}_{ij}} - \underbrace{\sum_{k=i}^{j-1}\left\{\left(-\Delta\widetilde{R}_{ik}\widetilde{v}_k^\wedge \delta\phi_{ik}\Delta t\right\} + \Delta\widetilde{R}_{ik}\eta_k^v \Delta t\right)}_{\delta p_{ij}},$$

where $\Delta R_{ik} = R_i^T R_k$, $J_{r,k}$ is a right Jacobian matrix of $\widetilde{\omega}_k \Delta t$, $\widetilde{v}_k^\wedge$ is an antisymmetric matrix of a vector $\widetilde{v}_k$, $\Delta\widetilde{R}_{ij}$ and $\Delta\widetilde{p}_{ij}$ are respectively a relative rotation and a relative translation obtained by ego vehicle velocity pre-integration, and are added to the pose graph as a velocity pre-integration factor between nodes corresponding to moments i and j, and $\delta\phi_{ij}$ and $\delta p_{ij}$ are corresponding noises. An error of estimation of the pose transformation is $e_V$.

In step 3.3, loop closure detection is performed to identify places that have been previously reached, so as to reduce a cumulative drift. In polar coordinates, the 4D radar point cloud is divided into grids, a 3D point cloud is mapped to a 2D matrix, and a value of each element in the matrix is a maximum energy intensity of radar points in a corresponding grid. As the vehicle moves, a cosine distance between a 2D matrix of the current frame and a 2D matrix generated by each of all previous keyframes is continuously searched for and computed, and if the distance is less than a set threshold, it is considered that a loop closure has been detected. Once a loop closure is detected, a relative pose transformation between the current frame and a submap composed of a loop closure frame and nearby keyframes is computed using the registration method introduced in the point cloud registration step. An error of estimation of the pose transformation is $e_L$.

In step 3.4, graph optimization is performed, where the pose graph is established, error terms of relative pose estimates at all moments are comprehensively considered, and optimal poses of the ego vehicle at all moments are estimated through graph optimization. All nodes in the pose graph correspond to poses at different moments, and edges between the nodes correspond to relative pose transformations between different moments. All the poses are expressed as $X = \{x_i\}$, $i \in \mathcal{K}$, and the optimal pose $X'^*$ is estimated by solving a nonlinear least squares problem:

$$X^* = \arg\min_X e_O + e_V + e_L,$$

where $\mathcal{K}$ includes all moments, and $e_O$, $e_V$, $e_L$ respectively correspond to the errors of relative pose transformations obtained in different steps.

In a specific implementation process, as shown in FIG. 1, the present invention is divided into three parts: (1) radar point cloud filtering, (2) ego vehicle velocity estimation, and (3) pose graph optimization, which mainly include the following steps.

In step 1, radar point cloud filtering is performed, where the original 4D radar point cloud mainly contains two types of noise: ghost points and random points, the ground point cloud is extracted, and the two consecutive frames of point clouds are compared, to remove the ghost points below the ground and the unstable random points, so as to reduce noise in the 4D radar point cloud.

In step 1.1, ghost point removal is performed, where ghost points are false measurements below the ground in the original 4D radar point cloud caused by the multipath effect of millimeter waves, and they are one of the 4D radar measurement noises. The ground point cloud is extracted from the original radar point cloud and then the ghost points below the ground are filtered out.

For the original radar point cloud $\mathcal{P} = \{\mathbf{P}_i\}$, $i \in \{1, 2, ..., n\}$ obtained by the 4D radar, $n$ is a number of points in the point cloud, a position of each point in a radar coordinate system may be expressed as $\mathbf{P}_i = (x_i, y_i, z_i)^T = (r_i \cos\theta_i \cos\varphi_i, r_i \sin\theta_i \cos\varphi_i, r_i \sin(\varphi_i))^T$, and $r_i$, $\theta_i$, $\varphi_i$ are spatial information of the point measured by the 4D radar: a distance, an azimuth angle, and an elevation angle. For the original radar point cloud, a point with a distance less than a threshold $\delta_r$ and a height within a threshold $\delta_h$ near a mounting height H of the radar is first retained, that is, for all $\mathbf{P}_i \in \mathcal{P}_k$, points that meet $\sqrt{x_i^2 + y_i^2 + z_i^2} \leq \delta_r$ and $z_i \in [\text{-H} - \delta_h, \text{-H} + \delta_h]$ are retained, because these points are most likely to belong to the ground. Then, an upward normal vector $n_i$ of each point is estimated using a principal component analysis method. Next, a point with a normal vector having an angle less than $\delta_n$ with a z-axis positive unit vector is retained, that is, a point that meets $n_i \cdot (0,0,1)^T \geq \cos\delta_n$ is retained. Finally, a plane $Ax + By + Cz + D = 0$ is extracted using a random sample consensus algorithm, the plane is considered as the ground, and the ghost points below the ground are filtered out, that is, points that meet $Ax_i + By_i + Cz_i + D < 0$ are filtered out.

In step 1.2, random point removal is performed, where random points are unstable and flickering false measurements contained in the original 4D radar point cloud, and are one of the measurement noises of the 4D radar. Since random points do not appear continuously in a plurality of consecutive frames of radar point clouds, random points are identified and filtered out by comparing a current point cloud and a previous frame of point cloud adjacent to the current point cloud.

First, a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1} \Delta t,$$

$$R_{k-1} = \text{Exp}(\tilde{\omega}_{k-1} \Delta t),$$

where $\tilde{v}_{k-1}$ and $\tilde{\omega}_{k-1}$ are respectively an ego vehicle linear velocity estimate and an ego vehicle angular velocity estimate of the previous frame, $\Delta t$ is a time difference between the two frames, and $\text{Exp}(\cdot): R^3 \to SO(3)$ is an exponential mapping of a three-dimensional rotation ($R^3$ is a three-dimensional real number vector space, and $SO(3)$ is a three-dimensional special orthogonal group). Then, the transformed previous frame of point cloud $\mathcal{P}'_{k-1}$ is obtained by transforming the previous frame of point cloud into the coordinate system of the current frame using $R_{k-1}$ and $t_{k-1}$. Next, a KD tree is constructed using $\mathcal{P}'_{k-1}$, so as to implement nearest neighbor search. If no point in $\mathcal{P}'_{k-1}$ exists within a specific range of a point in the current point cloud $\mathcal{P}_k$, the current point is classified as a random point and filtered out.

In step 2, ego vehicle velocity estimation is performed, where the 4D millimeter-wave radar can obtain a Doppler velocity of each point, and the Doppler velocity is a radial component of a relative velocity between the radar and a target point. Based on the property of the Doppler velocity, a linear velocity and an angular velocity of an ego vehicle are estimated based on Doppler velocity information in a 4D radar point cloud.

In step 2.1, static point extraction is performed. In addition to spatial information, the 4D radar can also obtain a Doppler velocity of each point in the point cloud. For an $i^{th}$ point in the 4D radar point cloud, if it is a stationary point with an absolute velocity of 0 in the real world, then its relative velocity to the radar is equal in magnitude and opposite in direction to the velocity of the radar. The Doppler velocity is a radial component of a relative velocity between the measured point and the 4D radar. Therefore, a relationship between the Doppler velocity of this point and the velocity of the radar is as follows:

$$v_{r,i} = -d_i \cdot v_s,$$

where $v_{r,i}$ is the Doppler velocity of the $i^{th}$ point, $d_i = (\cos \theta_i \cos \varphi_i, \sin \theta_i \cos \varphi_i, \sin \varphi_i)^T$ is a unit direction vector of the point relative to the radar, and $v_s$ is the velocity of the radar.

In addition, since the 4D radar is mounted on a vehicle, a relationship between the velocity of the radar and an ego vehicle velocity of the vehicle is as follows:

$$v_s = R_s^T(\widetilde{v} + \widetilde{\omega} \times t_s),$$

where $t_s$ and $R_s$ are respectively a mounting position and a pose of the 4D radar in a vehicle coordinate system, and $\widetilde{v} \in R^3$ and $\widetilde{\omega} \in R^3$ are respectively an ego vehicle linear velocity and an ego vehicle angular velocity. In the real world, most points in the 4D radar point cloud are static points. Therefore, for all static points in the 4D radar point cloud, the Doppler velocity and the ego vehicle velocity both conform to the following equation:

$$-\begin{bmatrix} v_{r,1} \\ \vdots \\ v_{r,m} \end{bmatrix} = \begin{bmatrix} d_i^{\,T} \\ \vdots \\ d_m^{\,T} \end{bmatrix} R_s^T [I_{3\times3} \quad -t_s^\wedge] \begin{bmatrix} \widetilde{v} \\ \widetilde{\omega} \end{bmatrix},$$

where m is a number of all the static points in the point cloud, $I_{3\times3}$ is a $3 \times 3$ unit matrix, and $t_s^\wedge \in R^{3\times3}$ is an antisymmetric matrix of $t_s$ ( $R^{3\times3}$ represents a set of $3 \times 3$ real matrices). Since relationships between Doppler velocities of dynamic points and the ego vehicle velocity do not conform to the equation described above, dynamic outliers are removed using the random sample consensus algorithm, and the static points are extracted.

In step 2.2, least squares estimation is performed, where after the static points are extracted, the ego vehicle velocity is estimated based on the relationships between the Doppler velocities of all the static points and the ego vehicle velocity again and the least square method.

In step 3, pose graph optimization is performed, where a current radar point cloud is registered with a local radar keyframe submap based on a normal distribution transformation, so as to obtain a millimeter-wave radar odometry factor; pre-integration is performed using the estimated ego vehicle velocity, so as to obtain a velocity pre-integration factor; and loop closure detection is performed to obtain a loop closure factor. Finally, the three factors are used to construct a pose graph, and an optimal pose is estimated based on graph optimization.

In step 3.1, point cloud registration is performed based on the normal distribution transformation, where the relative transformation is estimated by direct matching between a current 4D radar point cloud and a keyframe submap.

Due to that the 4D radar point cloud is too sparse, it is impossible to correctly estimate a pose only by matching of a single frame of point cloud. Therefore, a sliding window method is used to establish a denser radar submap using a plurality of keyframe point clouds. Specifically, if a translation or rotation from a last keyframe to a current point cloud exceeds a threshold, a current frame is selected as a new keyframe. Then, the new keyframe is added to the radar submap, and a node associated with the keyframe is added to the pose graph. When a number of keyframes in the submap exceeds a size of the window, the earliest keyframe is discarded. The radar submap established through this method can reflect local environmental features more clearly than a single frame of radar point cloud, improving the accuracy and robustness of point cloud registration.

After the radar submap is established, the submap is evenly divided into grids of a same size, and a point cloud in each grid is modeled as a local normal distribution. Due to the sparsity of the 4D radar point cloud, a case where there are less than three points in a grid or points in the grid are collinear (coplanar) may easily occur after grid division, making it difficult to invert the covariance of the normal distribution. Therefore, measurement uncertainty of each point is comprehensively considered when computing a mean and a covariance of the normal distribution. An advantage of this is to reduce the degeneration effect of covariance, and point cloud information in a grid can be fully used even when there are very few points in the grid. Then, the current 4D radar point cloud is registered with the radar submap to estimate a relative pose transformation $\widetilde{x}_{ij}^{O}$ that maximizes a distribution probability of the current point cloud in the submap, and the relative pose transformation is added to the pose graph as a radar odometry factor between nodes corresponding to moments i and j. An error of estimation of the pose transformation is $e_O$, in a form as follows:

$$e_O = \sum_{(i,j)\in\mathcal{K}} \left\| \mathrm{Log}\left( (\widetilde{x}_{ij}^O)^{-1} x_i^{-1} x_j \right) \right\|_{\Sigma_{ij}^O}^2 ,$$

where $\Sigma_{ij}^O$ is a corresponding covariance matrix, $\mathrm{Log}(-) : SE(3) \to R^6$ is a logarithmic mapping (SE(3) is a three-dimensional special Euclidean group, and $R^6$ is a six-dimensional real number vector space) of a three-dimensional transformation.

In step 3.2, velocity pre-integration is performed, where the relative pose transformation is computed using the estimated ego vehicle velocity, so that an additional reliable relative pose estimate is introduced, improving the accuracy and robustness of SLAM. An ego vehicle linear velocity and an ego vehicle angular velocity that are estimated at a moment $t$ are respectively denoted as $\widetilde{v}_t$ and $\widetilde{\omega}_t$, with their estimated values being true values each plus a zero-mean Gaussian white noise, that is:

$$\widetilde{\omega}_t = \omega_t + \eta_t^{\omega},$$

$$\widetilde{v}_t = R_{t\,W}^T v_t + \eta_t^{v},$$

where $\omega_t$ and $_W v_t$ are respectively the true values of the angular velocity and the linear velocity in a world coordinate system, $\eta_t^{\omega}$ and $\eta_t^{v}$ are corresponding noise terms, and $R_t$ is an orientation of the vehicle in the world coordinate system. Assuming that $\omega_t$ and $_W v_t$ remains unchanged within a very short period of time $[t, t + \Delta t]$, a position $p_{t+\Delta t}$ and a rotation $R_{t+\Delta t}$ at a moment $t + \Delta t$ can be computed based on a position $p_t$ and a rotation $R_t$ at a moment t:

$$R_{t+\Delta t} = R_t \mathrm{Exp}(\omega_t \Delta t) = R_t \mathrm{Exp}\big( (\widetilde{\omega}_k - \eta_k^{\omega})\Delta t \big),$$

$$p_{t+\Delta t} = p_t + {}_W v_t \Delta t = p_t + R_t(\widetilde{v}_t - \eta_t^{v})\Delta t.$$

For a point cloud of each frame between keyframes corresponding to two consecutive moments i and j, an ego vehicle velocity estimate can be obtained. Therefore, integration is performed for all time periods $\Delta t$ between moments i and j, and a position $p_j$ and a rotation $R_j$ at a moment j can be computed based on a position $p_i$ and a rotation $R_i$ at a moment i.

$$R_j = R_i \prod_{k=i}^{j-1} \mathrm{Exp}\left( (\widetilde{\omega}_k - \eta_k^{\omega})\Delta t \right) ,$$

$$p_j = p_i + \sum_{k=i}^{j-1} R_k(\widetilde{v}_k - \eta_k^v)\Delta t$$

.

From this, a relative rotation transformation $\Delta R_{ij}$ and a relative translation transformation $\Delta p_{ij}$ between a moment i and a moment j can be obtained:

$$\Delta R_{ij} = R_i^T R_j = \prod_{k=i}^{j-1} \mathrm{Exp}\left((\widetilde{\omega}_k - \eta_k^\omega)\Delta t\right)$$

$$= \underbrace{\prod_{k=i}^{j-1} \mathrm{Exp}(\widetilde{\omega}_k \Delta t)}_{\Delta \widetilde{R}_{ij}} \underbrace{\prod_{k=i}^{j-1} \mathrm{Exp}\left(-\Delta \widetilde{R}_{k+1,j}^T J_{r,k} \eta_k^\omega \Delta t\right)}_{\mathrm{Exp}(-\delta \phi_{ij})}$$

,

$$\Delta p_{ij} = R_i^T(p_j - p_i) = \sum_{k=i}^{j-1} \Delta R_{ik}(\widetilde{v}_k - \eta_k^v)\Delta t$$

$$= \underbrace{\sum_{k=i}^{j-1} \Delta \widetilde{R}_{ik}\widetilde{v}_k \Delta t}_{\Delta \widetilde{p}_{ij}} - \underbrace{\sum_{k=i}^{j-1}\left\{\left(-\Delta \widetilde{R}_{ik}\widetilde{v}_k^\wedge \delta\phi_{ik}\Delta t\right\} + \Delta \widetilde{R}_{ik}\eta_k^v \Delta t\right)}_{\delta p_{ij}}$$

.

where $\Delta R_{ik} = R_i^T R_k$, $J_{r,k}$ is a right Jacobian matrix of $\widetilde{\omega}_k \Delta t$, $\widetilde{v}_k^\wedge$ is an antisymmetric matrix of a vector $\widetilde{v}_k$, $\Delta \widetilde{R}_{ij}$ and $\Delta \widetilde{p}_{ij}$ are respectively a relative rotation and a relative translation obtained by ego vehicle velocity pre-integration, and are added to the pose graph as a velocity pre-integration factor between nodes corresponding to moments i and j. $\delta\phi_{ij}$ and $\delta p_{ij}$ are corresponding noises, in a form as follows:

$$\delta\phi_{ij} = \sum_{k=i}^{j-1} \Delta \widetilde{R}_{k+1,j}^T J_{r,k} \eta_k^\omega \Delta t$$

,

$$\delta p_{ij} = \sum_{k=i}^{j-1}\left(-\Delta \widetilde{R}_{ik}\widetilde{v}_k^\wedge \Delta\phi_{ik}\Delta t + \Delta \widetilde{R}_{ik}\eta_k^v \Delta t\right)$$

.

Because $\delta\phi_{ij}$ is a linear combination of a zero-mean Gaussian noise $\eta_k^\omega$, $\delta\phi_{ij}$ is a zero-mean Gaussian noise.

Similarly, $\delta p_{ij}$ is a zero-mean Gaussian noise because it is a linear combination of zero-mean Gaussian noises $\phi_{ik}$ and

$\boldsymbol{\eta}_k^v$ . The Gaussian noise is expressed as $\boldsymbol{\eta}_{ij}^V \doteq \left[\Delta\boldsymbol{\phi}_{ij}^T, \Delta\boldsymbol{p}_{ij}^T\right]^T \sim \mathcal{N}\left(\mathbf{0}_{6\times1}, \Sigma_{ij}^V\right)$ , then an error of estimation of the pose transformation is:

$$e_V = \sum_{(i,j)\in\mathcal{K}} \left\| r_{ij}^V \right\|_{\Sigma_{ij}^V}^2 ,$$

$$r_{ij}^V = \begin{bmatrix} r_{\Delta R_{ij}} \\ r_{\Delta p_{ij}} \end{bmatrix} = \begin{bmatrix} \mathrm{Log}\left(\Delta\widetilde{\boldsymbol{R}}_{ij}^T \boldsymbol{R}_i^T \boldsymbol{R}_j\right) \\ \boldsymbol{R}_i^T\left(\boldsymbol{p}_j - \boldsymbol{p}_i\right) - \Delta\widetilde{\boldsymbol{p}}_{ij} \end{bmatrix},$$

where $\mathrm{Log}(\cdot) : SO(3) \to R^3$ is a logarithmic mapping of a three-dimensional rotation.

In step 3.3, loop closure detection is performed to identify places that have been previously reached, so as to reduce a cumulative drift. In polar coordinates, the 4D radar point cloud is divided into grids, a 3D point cloud is mapped to a 2D matrix, and a value of each element in the matrix is a maximum energy intensity of radar points in a corresponding grid. As the vehicle moves, a cosine distance between a 2D matrix of the current frame and a 2D matrix generated by each of all previous keyframes is continuously searched for and computed, and if the distance is less than a set threshold, it is considered that a loop closure has been detected. Once a loop closure is detected, a relative pose transformation

$\widetilde{\boldsymbol{x}}_{kj}^L$ between the current frame j and a submap composed of a loop closure frame k and nearby keyframes is computed using the registration method introduced in the point cloud registration step. Then, $\widetilde{\boldsymbol{x}}_{kj}^L$ is added to the pose graph as a loop closure factor between nodes corresponding to moments j and k. An error of estimation of the pose transformation is:

$$e_L = \sum_{(k,j)\in\mathcal{L}} \left\| \mathrm{Log}\left(\left(\widetilde{\boldsymbol{x}}_{kj}^L\right)^{-1} \boldsymbol{x}_k^{-1}\boldsymbol{x}_j\right) \right\|_{\Sigma_{kj}^L}^2 ,$$

where L includes all loop closure frames, $\Sigma_{kj}^L$ is a corresponding covariance matrix, and $\mathrm{Log}(\cdot) : SE(3) \to R^6$ is a logarithmic mapping of a three-dimensional transformation.

In step 3.4, graph optimization is performed, where the pose graph is established, error terms of all relative pose estimates are comprehensively considered, and optimal poses of the ego vehicle at all moments are estimated through graph optimization, implementing more accurate and robust localization and mapping. All nodes in the pose graph correspond to poses at different moments, and edges between the nodes correspond to relative pose transformations between different moments. The pose is expressed as x = (R, p) ∈ SE(3), where Rand p are a rotation and a translation, respectively. The poses at all moments are expressed as $\boldsymbol{X} = \{x_i\}$, $i \in \mathcal{K}$ , and the optimal pose .X'* is estimated by solving a nonlinear least squares problem:

$$\mathcal{X}^* = \arg\min_{\mathcal{X}} e_O + e_V + e_L,$$

where $\mathcal{K}$ includes all moments, and $e_O$, $e_V$, $e_L$ respectively correspond to the errors of relative pose transformations obtained in different steps.

Those skilled in the art know that, in addition to implementing the system and the apparatus as well as various modules thereof provided by the present invention in the form of pure computer-readable program code, the system and the apparatus as well as various modules thereof provided by the present invention can certainly be implemented in the form of logic gates, switches, application-specific integrated circuits, programmable logic controllers, and embedded microcontrollers by logically programming the method steps to implement the same program. Therefore, the system and the apparatus as well as various modules thereof provided by the present invention may be considered as a hardware component, and the modules included therein for implementing various programs may also be considered as structures within the hardware component. The modules for implementing various functions may also be considered as both software programs for implementing methods and structures within the hardware component.

The specific embodiments of the present invention are described above. It should be understood that the present invention is not limited to the specific implementation described above, and various changes or modifications may be made by those skilled in the art within the scope of the claims, which does not affect the essential contents of the present invention. In case of no conflict, the embodiments in the present application and the features in the embodiments can be combined with each other.

## Claims

1. A pose graph SLAM computation method based on a 4D millimeter-wave radar, the method comprising:

   step S1: extracting a ground point cloud, and comparing two consecutive frames of point clouds, to remove ghost points below the ground and random points;

   step S2: estimating a linear velocity and an angular velocity of a device based on Doppler velocity information in a 4D radar point cloud; and

   step S3: estimating and constructing a pose graph using a relative pose transformation that is obtained through point cloud registration performed based on a normal distribution transformation, pre-integration performed using an estimated device velocity, and loop closure detection; and estimating an optimal pose through graph optimization.

2. The pose graph SLAM computation method based on a 4D millimeter-wave radar according to claim 1, wherein in step S1,

   the ground point cloud is extracted, and the two consecutive frames of point clouds are compared, to remove the ghost points below the ground and the unstable random points, so as to reduce noise in the 4D radar point cloud, wherein step S1 comprises the following steps:

   step S1.1: ghost point removal, wherein the ground point cloud is extracted from an original radar point cloud and the ghost points below the ground are filtered out;

   for the original radar point cloud $\mathcal{P} = \{\mathbf{P}_i\}$, $i \in \{1, 2, ..., n\}$ measured by a 4D radar, $n$ is a number of points in the point cloud;

   a position of each point in a radar coordinate system is expressed as $\mathbf{P}_i = (x_i, y_i, z_i)^T = (r_i \cos\theta_i \cos\varphi_i, r_i \sin\theta_i \cos\varphi_i, r_i \sin\varphi_i)^T$, wherein $r_i$ is a distance of the point measured by the 4D radar, $\theta_i$ is an azimuth angle of the point measured by the 4D radar, and $\varphi_i$ is an elevation angle of the point measured by the 4D radar; and

   for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

   step S1.2: random point removal, wherein the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

   a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1}\Delta t$$

$$R_{k-1} = \mathrm{Exp}(\tilde{\omega}_{k-1}\Delta t)$$

wherein $\tilde{v}_{k-1}$ and $\tilde{\omega}_{k-1}$ are respectively a device linear velocity estimate and a device angular velocity estimate of the previous frame, $\Delta t$ is a time difference between the two frames, $\mathrm{Exp}(\cdot)$: $\boldsymbol{R}^3 \rightarrow \mathbf{SO}(3)$ is an exponential mapping of a three-dimensional rotation, $R^3$ is a three-dimensional real number vector space, SO(3) is a three-dimensional special orthogonal group , and $\mathcal{P}'_{k-1}$ is obtained by transforming the previous frame of point cloud into the coordinate system of the current frame using $R_{k-1}$ and $t_{k-1}$; andif no point in $\mathcal{P}'_{k-1}$ exists within a preset range of a point in the current frame, the current point is classified as a random point and filtered out.

3. The pose graph SLAM computation method based on a 4D millimeter-wave radar according to claim 1, wherein in step S2, the following steps are comprised:

step S2.1: static point extraction, wherein for an $i^{th}$ point in the 4D radar point cloud, a relationship between a Doppler velocity of the point and a velocity of the radar is as follows:

$$v_{r,i} = -d_i \cdot v_s$$

wherein $v_{r,i}$ is the Doppler velocity of the $i^{th}$ point, $\boldsymbol{d}_i = (\cos\theta_i\cos\varphi_i, \sin\theta_i\cos\varphi_i, \sin\varphi_i)^T$ is a unit direction vector of the point relative to the radar, and $v_s$ is the velocity of the radar; and a relationship between the velocity of the radar and the device velocity is as follows:

$$\boldsymbol{v}_s = \boldsymbol{R}_s^T(\tilde{v} + \tilde{\omega} \times \boldsymbol{t}_s)$$

wherein $t_s$ and $R_s$ are respectively a mounting position and a pose of the 4D radar in a device coordinate system, $\tilde{v} \in \boldsymbol{R}^3$ and $\tilde{\omega} \in \boldsymbol{R}^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} \boldsymbol{d}_i^T \\ \vdots \\ \boldsymbol{d}_m^T \end{bmatrix} \boldsymbol{R}_s^T [\boldsymbol{I}_{3\times3} \quad -\boldsymbol{t}_s^\wedge] \begin{bmatrix} \tilde{v} \\ \tilde{\omega} \end{bmatrix},$$

wherein $m$ is a number of all the static points in the point cloud, $I_{3\times3}$ is a $3 \times 3$ unit matrix, $\boldsymbol{t}_s^\wedge \in \boldsymbol{R}^{3\times3}$ is an antisymmetric matrix of $t_s$, $R^{3\times3}$ represents a set of $3 \times 3$ real matrices, and dynamic outliers are removed and the static points are extracted based on relationships between Doppler velocities of all the static points in the radar point cloud and the device velocity using the random sample consensus algorithm; and
step S2.2: least squares estimation, wherein after the static points are extracted, the device velocity is computed based on the relationships between the Doppler velocities of all the static points and the device velocity using the least square method.

4. The pose graph SLAM computation method based on a 4D millimeter-wave radar according to claim 1, wherein in step S3,
pose graph optimization is performed, wherein the pose graph is estimated and constructed using the relative pose transformation that is obtained through the point cloud registration, the velocity pre-integration, and the loop closure detection; and finally the optimal pose is estimated through the graph optimization, wherein the following steps are comprised:

step S3.1: point cloud registration based on the normal distribution transformation, wherein a relative transformation is estimated by matching between a current 4D radar point cloud and a keyframe submap;

a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and

after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, wherein an error of estimation of the pose transformation is $e_O$; and

step S3.2: velocity pre-integration, wherein the relative pose transformation is computed based on the estimated device velocity, so that an additional reliable relative pose estimate is introduced, and a device linear velocity and a device angular velocity that are estimated at a moment t are respectively denoted as $\tilde{v}_t$ and $\tilde{\omega}_t$ with their estimated values being true values each plus a zero-mean Gaussian white noise:

$$\tilde{\omega}_t = \omega_t + \eta_t^\omega,$$

$$\tilde{v}_t = R_{t\,W}^T v_t + \eta_t^v,$$

wherein $\omega_t$ and $_W v_t$ are respectively the true values of the angular velocity and the linear velocity in a world coordinate system, $\eta_t^\omega$ and $\eta_t^v$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

5. The pose graph SLAM computation method based on a 4D millimeter-wave radar according to claim 4, comprising the following steps:

step S3.3: loop closure detection, wherein a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

step S3.4: graph optimization, wherein the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments; and all the poses are expressed as $X = \{x_i\}$, $i \in \mathcal{K}$, and the optimal pose $.X'^*$ is estimated by solving a nonlinear least squares problem:

$$X^* = \arg\min_X e_O + e_V + e_L$$

wherein $\mathcal{K}$ comprises all moments, and $e_O$, $e_V$, $e_L$ respectively correspond to the errors of relative pose transformations obtained in different steps.

6. A pose graph SLAM computation system based on a 4D millimeter-wave radar, comprising:

a module M1 configured to extract a ground point cloud, and compare two consecutive frames of point clouds, to remove ghost points below the ground and random points;
a module M2 configured to estimate a linear velocity and an angular velocity of a device based on Doppler velocity information in a 4D radar point cloud; and

a module M3 configured to estimate and construct a pose graph using a relative pose transformation that is obtained through point cloud registration performed based on a normal distribution transformation, pre-integration performed using an estimated device velocity, and

loop closure detection; and estimate an optimal pose through graph optimization.

7. The pose graph SLAM computation system based on a 4D millimeter-wave radar according to claim 6, wherein in the module M1,

the ground point cloud is extracted, and the two consecutive frames of point clouds are compared, to remove the ghost points below the ground and the unstable random points, so as to reduce noise in the 4D radar point cloud, wherein

a module M1.1 is configured to perform the following operation: ghost point removal, wherein the ground point cloud is extracted from an original radar point cloud and the ghost points below the ground are filtered out;

for the original radar point cloud $\mathcal{P} = \{\mathbf{P}_i\}$, $i \in \{1, 2, ..., n\}$ measured by a 4D radar, n is a number of points in the point cloud;

a position of each point in a radar coordinate system is expressed as $\mathbf{P}_i = (x_i, y_i, z_i)^T = (r_i \cos \theta_i \cos \varphi_i, r_i \sin \theta_i \cos \varphi_i, r_i \sin \varphi_i)^T$, wherein $r_i$ is a distance of the point measured by the 4D radar, $\theta_i$ is an azimuth angle of the point measured by the 4D radar, and $\varphi_i$ is an elevation angle of the point measured by the 4D radar; and

for the original radar point cloud, a point with a distance less than a threshold $\delta_r$ and a height within a threshold $\delta_h$ near a mounting height of the radar is retained, an upward normal vector of each point is computed using a principal component analysis method, a point with a normal vector having an angle less than $\delta_n$ with a z-axis positive unit vector is retained, ground points are extracted using a random sample consensus algorithm, and the ghost points below the ground are filtered out; and

a module M1.2 is configured to perform the following operation: random point removal, wherein the random points are identified and filtered out by comparing a current point cloud and a previous frame of point cloud adjacent to the current point cloud, for the current point cloud and the previous frame of point cloud adjacent to the current point cloud, a pose transformation between the current point cloud and the previous frame of point cloud is computed based on the device velocity, the previous frame of point cloud is transformed into a coordinate system of the current frame, and if the transformed previous frame of point cloud does not exist within a preset range near a point in the current frame, the point is classified as a random point and filtered out; and

a rotation transformation $R_{k-1}$ and a translation transformation $t_{k-1}$ between the current point cloud $\mathcal{P}_k$ and the previous frame of point cloud $\mathcal{P}_{k-1}$ adjacent to the current point cloud are computed:

$$t_{k-1} = \tilde{v}_{k-1} \Delta t$$

$$R_{k-1} = \text{Exp}(\tilde{\omega}_{k-1} \Delta t)$$

wherein $\tilde{v}_{k-1}$ and $\tilde{\omega}_{k-1}$ are respectively a device linear velocity estimate and a device angular velocity estimate of the previous frame, $\Delta t$ is a time difference between the two frames, $\text{Exp}(\cdot): R^3 \to SO(3)$ is an exponential mapping of a three-dimensional rotation, $R^3$ is a three-dimensional real number vector space, $SO(3)$ is a three-dimensional special orthogonal group , and $\mathcal{P}'_{k-1}$ is obtained by transforming the previous frame of point cloud into the coordinate system of the current frame using $R_{k-1}$ and $t_{k-1}$; and if no point in $\mathcal{P}'_{k-1}$ exists within a preset range of a point in the current frame, the current point is classified as a random point and filtered out.

8. The pose graph SLAM computation system based on a 4D millimeter-wave radar according to claim 6, wherein in the module M2,

a module M2.1 is configured to perform the following operation: static point extraction, wherein for an $i^{th}$ point in the 4D radar point cloud, a relationship between a Doppler velocity of the point and a velocity of the radar is as follows:

$v_{r,i} = -d_i \cdot v_s$ wherein $v_{r,i}$ is the Doppler velocity of the $i^{th}$ point, $\boldsymbol{d}_i = (\cos \theta_i \cos \varphi_i, \sin \theta_i \cos \varphi_i, \sin \varphi_i)^T$ is a unit direction vector of the point relative to the radar, and $v_s$ is the velocity of the radar; and
a relationship between the velocity of the radar and the device velocity is as follows:

$$v_s = R_s^T(\widetilde{v} + \widetilde{\omega} \times t_s)$$

wherein $t_s$ and $R_s$ are respectively a mounting position and a pose of the 4D radar in a device coordinate system, $\widetilde{v} \in R^3$ and $\widetilde{\omega} \in R^3$ are respectively the linear velocity and the angular velocity of the device, and for all static points in the 4D radar point cloud, the Doppler velocity and the device velocity both conform to the following equation:

$$-\begin{bmatrix} v_{r,1} \\ \vdots \\ v_{r,m} \end{bmatrix} = \begin{bmatrix} d_i^T \\ \vdots \\ d_m^T \end{bmatrix} R_s^T [I_{3\times3} \quad -t_s^\wedge] \begin{bmatrix} \widetilde{v} \\ \widetilde{\omega} \end{bmatrix},$$

wherein m is a number of all the static points in the point cloud, $I_{3\times3}$ is a $3 \times 3$ unit matrix, $t_s^\wedge \in R^{3\times3}$ is an antisymmetric matrix of $t_s$, $R^{3\times3}$ represents a set of $3 \times 3$ real matrices, and dynamic outliers are removed and the static points are extracted based on relationships between Doppler velocities of all the static points in the radar point cloud and the device velocity using the random sample consensus algorithm; and
a module M2.2 is configured to perform the following operation: least squares estimation, wherein after the static points are extracted, the device velocity is computed based on the relationships between the Doppler velocities of all the static points and the device velocity using the least square method.

9. The pose graph SLAM computation system based on a 4D millimeter-wave radar according to claim 6, wherein in the module M3,

pose graph optimization is performed, wherein the pose graph is estimated and constructed using the relative pose transformation that is obtained through the point cloud registration, the velocity pre-integration, and the loop closure detection; and finally the optimal pose is estimated through the graph optimization, wherein
a module M3.1 is configured to perform the following operation: point cloud registration based on the normal distribution transformation, wherein a relative transformation is estimated by matching between a current 4D radar point cloud and a keyframe submap;
a radar submap is established using a plurality of keyframe point clouds and a sliding window, if a translation or rotation from a last keyframe to a current point cloud exceeds a threshold, a current frame is selected as a new keyframe, the new keyframe is added to the radar submap, and when a number of keyframes in the submap exceeds a size of the window, the earliest keyframe is discarded; and
after the radar submap is established, the submap is evenly divided into grids of a same size, a point cloud in each grid is modeled as a local normal distribution, measurement uncertainty of each point is considered when computing a mean and a covariance of the normal distribution, and the current 4D radar point cloud is registered with the radar submap to compute a relative pose transformation that maximizes a distribution probability of the current point cloud in the submap, wherein an error of estimation of the pose transformation is $e_O$; and
a module M3.2 is configured to perform the following operation: velocity pre-integration, wherein the relative pose transformation is computed based on the estimated device velocity, so that an additional reliable relative pose estimate is introduced, and a device linear velocity and a device angular velocity that are estimated at a moment t are respectively denoted as $\widetilde{v}_t$ and $\widetilde{\omega}_t$, with their estimated values being true values each plus a zero-mean Gaussian white noise:

$$\widetilde{\omega}_t = \omega_t + \eta_t^\omega,$$

$$\widetilde{v}_t = R_t^T{}_W v_t + \eta_t^v,$$

wherein $\omega_t$ and $_W v_t$ are respectively the true values of the angular velocity and the linear velocity in a world coordinate system, $\eta_t^\omega$ and $\eta_t^v$ are corresponding noise terms, $R_t$ is an orientation of the device in the world coordinate system, a relative rotation transformation $\Delta R_{ij}$ and a relative translation transformation $\Delta p_{ij}$ between a moment i and a moment j are obtained by integration, and an error of estimation of the pose transformation is $e_V$.

10. The pose graph SLAM computation system based on a 4D millimeter-wave radar according to claim 9, wherein

a module M3.3 is configured to perform the following operation: loop closure detection, wherein a position that has been previously reached is identified, in polar coordinates, the 4D radar point cloud is divided into grids, a 3D point cloud is mapped to a 2D matrix, a value of each element in the matrix is a maximum energy intensity of radar points in a corresponding grid, as the device moves, a cosine distance between a 2D matrix of the current frame and a 2D matrix generated by each of all previous keyframes is continuously searched for and computed, and if the distance is less than a set threshold, it is considered that a loop closure has been detected; when a loop closure is detected, a relative pose transformation between the current frame and a submap composed of a loop closure frame and nearby keyframes is computed; and an error of estimation of the pose transformation is $e_L$; and

a module M3.4 is configured to perform the following operation: graph optimization, wherein the pose graph is established, error terms of relative pose estimates at all moments are considered, optimal poses of the device at all moments are estimated through graph optimization, all nodes in the pose graph correspond to poses at different moments, and edges between the nodes correspond to relative pose transformations between different moments; and all the poses are expressed as $X = \{x_i\}, i \in \mathcal{K}$, and the optimal pose $X'^*$ is estimated by solving a nonlinear least squares problem:

$$X^* = \arg \min_{X} e_O + e_V + e_L$$

wherein $\mathcal{K}$ comprises all moments, and $e_O$, $e_V$, $e_L$ respectively correspond to the errors of relative pose transformations obtained in different steps.

Figure 1

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111522043 A

**Non-patent literature cited in the description**

- **Z. HONG ; Y. PETILLOT ; S. WANG.** RadarSLAM: Radar based Large-Scale SLAM in All Weathers. *2020 IEEE/RSJ International Conference on Intelligent Robots and Systems (IROS),* October 2020, ISSN 2153-086, 5164-5170
- **D. KELLNER ; M. BARJENBRUCH ; J. KLAPPSTEIN ; J. DICKMANN ; K. DIETMAYER.** Instantaneous ego-motion estimation using Doppler radar. *16th International IEEE Conference on Intelligent Transportation Systems (ITSC 2013),* October 2013, ISSN 2153-0017, 869-874

- A Normal Distribution Transform-Based Radar Odometry Designed For Scanning and Automotive Radars. **P.-C. KUNG ; C.-C. WANG ; W.-C. LIN.** 2021 IEEE International Conference on Robotics and Automation (ICRA). Xi'an, China. IEEE, May 2021, 14 417-14 423